# EUROPÄISCHE PATENTSCHRIFT

(11) **EP 0 572 844 B1**
(45) Veröffentlichungstag und Bekanntmachung des Hinweises auf die Patenterteilung: **18.11.1998**
(21) Anmeldenummer: 93107928.9
(22) Anmeldetag: 14.05.1993
(51) Int. Cl.: C08L 67/06, C08L 63/10, C08L 75/14

(54) **Verfahren zur Herstellung einer härtbaren Formmasse**
Process for the preparation of a curable moulding composition
Procédé pour la préparation d'une composition à mouler durcissable

(30) Priorität: 30.05.1992 DE 4217914
(43) Veröffentlichungstag der Anmeldung: 08.12.1993
(73) Patentinhaber: DSM RESINS B.V., 8022 AW Zwolle (NL)
(72) Erfinder: Hesse, Anton, Dr., W-6940 Weinheim (DE); Hofmann, Juergen, W-6700 Ludwigshafen (DE); Heckmann, Walter, Dr., W-6940 Weinheim (DE); Warzelhan, Volker, Dr., W-6719 Weisenheim (DE)
(74) Vertreter: den Hartog, Jeroen Hendrikus Joseph

(56) Entgegenhaltungen:
- EP-A- 0 525 510
- FR-A- 2 261 307
- US-A- 3 256 362

## Beschreibung

Die Erfindung betrifft ein Verfahren zur Herstellung einer härtbaren Formmasse auf Basis einer Dispersion eines feinteiligen Ethylenpolymerisats in einem ungesättigten Polyesterharz.

Es ist bekannt, daß ungesättigte Polyesterharze, denen thermoplastische Kunststoffe, wie z.B. Polyethylenpulver, zugesetzt wurden, zu Formkörpern mit verbesserter Zähigkeit und verringerter Schrumpfneigung ausgehärtet werden können.

Die FR-A 1 148 285 beschreibt das Einarbeiten von pulverförmigem Polyethylen mit einer Teilchengröße von etwa 60 µm, zusammen mit einem organischen Peroxid, in eine styrolische Lösung eines ungesättigten Polyesterharzes. Das erhaltene Gießharz wird zu Formkörpern mit verbesserten elektrischen Eigenschaften ausgehärtet. Nach GB-A 1 250 631 werden Preßmassen hergestellt durch Vermischen eines styrolischen Polyesterharzes mit einem flüssigen Polyester, feinteiligem Polyethylen (Teilchengröße 8 bis 30 µm), Peroxid-Initiator, Calciumcarbonat als Füllstoff und geschnittenen Glasfasern. Die Masse wird zu Formkörpern mit geringem Schrumpf und verminderter Neigung zum Ausschwitzen des flüssigen Polyesters ausgehärtet. In beiden Fällen wird feinteiliges Polyethylenpulver eingesetzt. Die Herstellung und Verarbeitung derartiger feinteiliger Polyethylenpulver ist jedoch wegen der damit verbundenen Staubexplosionsgefahr recht problematisch und zudem kostenaufwendig, so daß die genannten Verfahren in der Praxis nicht eingeführt wurden. Ähnliches gilt für die härtbaren Gießharzmassen nach DE-B 24 31 410, die aus einer Mischung aus einem ungesättigten Polyester, Styrol und einem durch Emulsionspolymerisation und anschließende Sprühtrocknung hergestellten, säuregruppenhaltigen Ethylenpolymerisat-Pulver bestehen.

Nach der DE-A 12 41 983 werden Polyesterpreßmassen hergestellt durch Vermischen einer styrolischen Lösung eines Ethylen/Vinylacetat-Mischpolymerisats mit einer styrolischen Lösung eines ungesättigten Polyesters und einem Peroxid.

Derartige Öl-in-Öl-Emulsionen neigen jedoch zu Phasenseparation, was ihre Verarbeitung problematisch macht. Dies trifft auch auf die SMC- und BMC-Massen nach US-A 4 161 471 zu, die durch Zusatz eines Chloropren- oder Ethylen/Propylen-Kautschuks elastifiziert werden. Die Ethylen/Propylen-Copolymeren werden in einem aufwendigen Verfahren erst thermisch abgebaut, dann mit Styrol angepastet und mit einer Polyesterharzpaste vermischt. Dabei entsteht eine Öl-in-Öl-Emulsion.

Die DE-A 23 05 246 betrifft eine ungesättigte Polyesterharzmasse, die ein pulverförmiges Olefin-Pfropfpolymerisat dispergiert enthält. Dieses wird auf umständliche Weise hergestellt durch Bestrahlen von Polyethylenpulver mit Elektronenstrahlen, Dispergieren in Wasser, Zusatz von Styrol, Polymerisation, Filtrieren und Trocknen des entstandenen Pfropfpolymerisats, das schließlich in eine Lösung eines ungesättigten Polyesters in Styrol eingerührt wird.

In den Druckschriften DE-B 24 08 898, DE-B 24 10 083 und DE-A 24 49 785 ist ein Verfahren zur Herstellung fließfähiger, stabiler Dispersion von Ethylenpolymerisaten in styrolischen Lösungen von ungesättigten Polyestern beschrieben. Dabei wird bei erhöhter Temperatur ein Ethylenpolymerisat, z.B. Hochdruckpolyethylen, in Styrol gelöst, diese Lösung wird mit einer styrolischen Lösung des ungesättigten Polyesters bei 50 bis 120°C in einer Zone hoher Turbulenz unter Einwirkung starker Scherkräfte vereinigt und die Mischung wird so lange gerührt, bis sich ein niederviskoser, fließfähiger Zustand ausgebildet hat. Auch dieses technisch sehr aufwendige Verfahren hat sich nicht durchsetzen können. Dies trifft auch auf das Verfahren nach DE-C 25 51 144 zu, nach welchem auf die Einwirkung starker Scherkräfte verzichtet werden kann, wenn man die vereinigten styrolischen Lösungen in Gegenwart eines urethangruppenhaltigen Thixotropiermittels verrührt. Es sind dann allerdings lange Verweilzeiten erforderlich, in den Beispielen wird jeweils 4 Stunden lang gerührt.

Der Erfindung lag also die Aufgabe zugrunde, ein technisch einfach und mit kurzen Zykluszeiten durchführbares Verfahren zur Herstellung von Dispersionen feinteiliger Ethylenpolymerisate in einem ungesättigen Polyesterharz zu entwickeln, welche nach Zusatz von Peroxid-Initiatoren zu zähen und schwundarmen Formkörpern ausgehärtet werden können.

Diese Aufgabe wird erfindungsgemäß dadurch gelöst, daß man eine Schmelze des Ethylenpolymerisats in einer Schmelze des ungesättigten Polyesters gleichmäßig verteilt.

Polyethylen fällt bei der Herstellung im technischen Maßstab als Granulat oder Grieß mit einem Durchmesser von mehr als 1 mm an. Es ist bei Raumtemperatur nicht mahlbar. Bei der recht aufwendigen Tieftemperaturmahlung erhält man Partikel mit einem Durchmesser von 150 bis 300 µm, die eine unregelmäßige Form und rauhe, poröse Oberfläche aufweisen. Setzt man solche gemahlene Polyethylenpartikel ungesättigten Polyesterharzen zu und härtet diese, dann weisen die erhaltenen Formteile eine unruhige Oberfläche auf. Die Dispersion von vorzugsweise runden Polyethylen-Partikeln mit glatter Oberfläche und einem mittleren Durchmesser von 2 bis 200 µm im Polyesterharz erhält man, wenn man erfindungsgemäß eine Schmelze des Ethylenpolymerisats in einer Schmelze des ungesättigten Polyesters gleichmäßig verteilt.

In der DE-B 1 153 905 ist ein Verfahren zur Herstellung von Formmassen beschrieben, bei dem ein Gemisch aus mehr als 50 Gew.-% Polyolefin und weniger als 50 Gew.-% ungesättigtem Polyesterharz in Gegenwart von Radikalbildnern bei Temperaturen zwischen 60 und 350°C intensiv verknetet wird. Die Komponenten können dabei zunächst in üblichen Mischmaschinen, z.B. Wirbel- oder Rührflügelmischern vorgemischt werden. Dabei entsteht jedoch keine Dispersion von feinteiligen Polyolefinpartikeln im Polyesterharz. Beim Verkneten der Mischung in Gegenwart des Radikalbildners vernetzt das Polyesterharz und ist dann im Polyolefin als kohärenter Phase dispergiert. Die erhaltene Formmasse weist nicht mehr die gute Fließfähigkeit eines ungesättigten Polyesterharzes auf.

Zu den einzelnen Komponenten ist folgendes zu sagen:
Ungesättigte Polyester sind durch einen Gehalt an 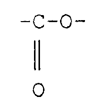 und -CH=CH- Gruppen gekennzeichnet.
1. Bevorzugt sind die ungesättigten Polyester (UP) im strengeren Sinne. Dies sind Kondensationsprodukte aus mehrwertigen, insbesondere zweiwertigen Carbonsäuren und deren veresterbaren Derivaten, insbesondere deren Anhydriden, die mit mehrwertigen, insbesondere zweiwertigen Alkoholen esterartig verknüpft sind, und gegebenenfalls zusätzliche Reste einwertiger Carbonsäuren oder einwertiger Alkohole enthalten, wobei zumindest ein Teil der Einsatzstoffe über ethylenisch ungesättigte, copolymerisationsfähige Gruppen verfügen muß.
   Die Säurezahl des ungesättigten Polyesterharzes sollte unterhalb von 100, insbesondere zwischen 0 und 50 liegen. Besonders bevorzugt sind Polyesterharze aus Maleinsäure, gegebenenfalls zusammen mit o-Phthalsäure einerseits und Diolen, wie Dipropylenglykol, Diethylenglykol und/oder Propandiol-1,2 andererseits, gelöst in Styrol.
   Besonders gute Anbindung der Polyethylenphase an die Polyesterphase im Formteil erhält man dann, wenn die ungesättigten Polyesterharze cycloaliphatische Bausteine enthalten, vorzugsweise solche auf Basis von Dicyclopentadien, Tetrahydrophthalsäure oder Endomethylentetrahydrophthalsäure. Die Menge der cycloaliphatischen Bausteine im ungesättigten Polyester beträgt vorzugsweise 0,1 bis 2 Mol pro (Maleinsäure + Fumarsäure)-Baustein.
2. Geeignet sind auch Vinylesterharze (VE-Harze). Kennzeichnend für diese Klasse von Harzen ist die Gruppe 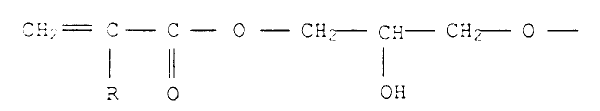 mit R = H oder CH₃.
   Unter VE-Harzen, die auch Epoxidacrylate genannt werden, versteht man gemeinhin Umsetzungsprodukte von Polyepoxiden mit ungesättigten Monocarbonsäuren, vorzugsweise mit Methacrylsäure. Diese Harze werden beispielsweise in GB-A 1 006 587 und in den US-PS 3 066 112 und 3 179 623 beschrieben, wobei bevorzugt VE-Harze auf Basis von Bisphenol A zur Anwendung kommen. Sie zeichnen sich durch hohe Zähigkeit und gute Chemikalienbeständigkeit bei begrenzter Wärmeformbeständigkeit aus. Vinylesterharze aus Epoxy-Novolakharzen und (Meth-)Acrylsäure, wie sie beispielsweise in der US-PS 3 256 226 beschrieben werden, weisen dagegen höhere Wärmeformbeständigkeiten, aber geringere Zähigkeiten auf.
3. Vinylesterurethanharze (VU-Harze) sind bekannt, z.B. aus US-A 3 297 845, US-A 3 772 404, US-A 4 618 658, GB-A 2 217 722 und DE-A 37 44 390. Sie weisen im allgemeinen folgende Gruppen auf:
   a) 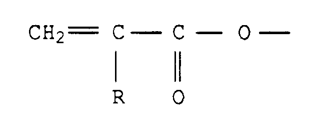 (mit R = H oder CH₃).
   b) 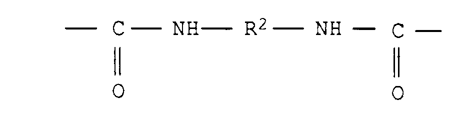 (mit R² = zweiwertiger aliphatischer, aromatischer oder cycloaliphatischer Rest mit 4 bis 40 C-Atomen, vorzugsweise ein aromatischer Rest mit 6 bis 20 C-Atomen), gegebenenfalls
   c)-O-R³-O-
      (mit R³ = zweiwertiger aliphatischer, cycloaliphatischer oder aromatischer Rest mit 2 bis 500 C-Atomen, vorzugsweise ein aliphatischer Rest mit 4 bis 100 C-Atomen), sowie gegebenenfalls
   d) -NH-R⁴-NH-
      (mit R⁴ = aliphatischer, cycloaliphatischer oder aromatischer Rest mit 2 bis 100 C-Atomen).
   Vorzugsweise ist das VU-Harz ein Umsetzungsprodukt aus
   - einem polyfunktionellen Isocyanat,
   - gegebenenfalls einem mehrwertigen Alkohol,
   - gegebenenfalls einem mehrwertigen Amin,
   - einem Hydroxyalkyl-(meth)acrylat,
   wobei bei der Umsetzung das Gewichtsverhältnis Isocyanat: (Alkohol+Amin) zwischen 100:0 und 100:300 beträgt und das Äquivalentverhältnis Hydroxyalkyl(meth)acrylat zu den freien Isocyanatgruppen des Umsetzungsproduktes zwischen 3:1 und 1:2 liegt.

Ethylenpolymerisate im Sinne der Erfindung sind Homopolymerisate des Ethylens und Copolymerisate mit weniger als 50 Mol-%, insbesondere 0 bis 40 Mol-% üblicher Comonomerer. Als Comonomere finden α-Olefine mit 3 bis 8 C-Atomen, wie Propylen, Isobuten, Buten-1 Verwendung. Ferner sind auch Vinylester organischer Carbonsäuren mit 1 bis 19 C-Atomen, vorzugsweise Vinylacetat, Vinylhalogenide wie Vinylchlorid, (Meth)acrylsäure, ihre Ester, die 1 bis 8 C-Atome in der Alkoholkomponente enthalten, ihre Nitrile und Amide, wie beispielsweise Methylmethacrylat, Ethylacrylat, Butylacrylat, (Meth)acrylnitril, ggf. substituiertes (Meth)acrylamid geeignet. Auch Pfropfcopolymerisate sind geeignet, beispielsweise solche mit Maleinsäureanhydrid als Pfropfcomonomer.

Bevorzugtes Ethylenpolymerisat ist Hochdruckpolyethylen, daneben sind auch nach dem Niederdruck- und Mitteldruckverfahren hergestellte Polyethylentypen gut geeignet.

Die nach DIN 53 735 bei 190°C und 2.16 kp Belastung gemessenen Schmelzindexwerte des Ethylenpolymerisats liegen vorzugsweise im Bereich von nicht fließfähig bis zu 1000 [g/10 min]; bevorzugt werden Polyethylentypen mit Schmelzindexwerten zwischen 1 und 40 verwendet.

Die nach ISO 3146 gemessene DSC-Schmelzpunkte liegen vorzugsweise unterhalb von 136°C, insbesondere zwischen 90 und 135°C.

Es können auch Gemische verschiedener Ethylenpolymerisate eingesetzt werden, wobei sich sich die Komponenten durch ihr Molekulargewicht, die Polarität und den Schmelzpunkt deutlich unterscheiden können. Ebenso kann man von Abmischungen von Ethylenpolymerisaten mit untergeordneten Mengen anderer Thermoplaste, z.B. von Polypropylen ausgehen, insbesondere von einem niedermolekularen, thermisch abgebauten Polypropylen, oder von einem mit Maleinsäureanhydrid gepfropften Polypropylen. Die Abmischung der verschiedenen Polymerisate erfolgt entweder vor oder während der Dispergierung in der Schmelze des ungesättigten Polyesters.

Das erfindungsgemäße Verfahren ist dadurch gekennzeichnet, daß man eine Schmelze des Ethylenpolymerisats B in einer Schmelze des ungesättigten Polyesters A gleichmäßig verteilt und auf diese Weise eine Dispersion des Ethylenpolymerisats als disperse Phase in dem ungesättigten Polyester als kohärenter Phase herstellt. Dies kann mit jedem geeigneten Mischaggregat durchgeführt werden, vorzugsweise in einem Extruder oder einem Rührkessel mit innen- oder außenliegenden Mischvorrichtungen.

### a) Extruderverfahren

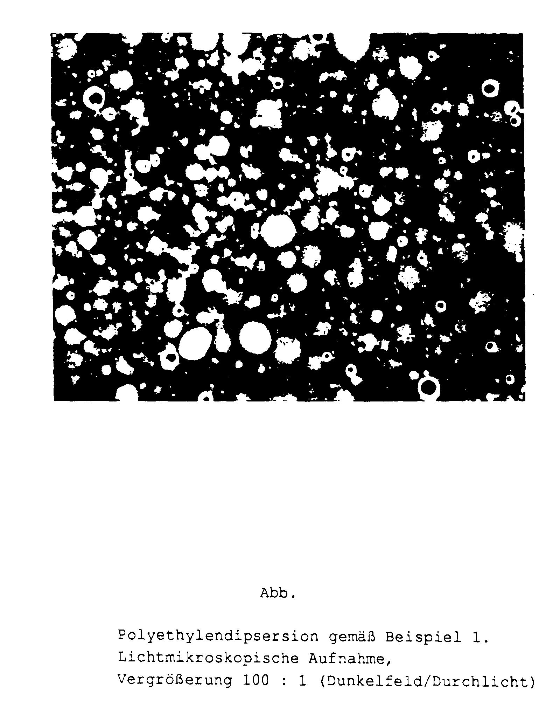

In einem Extruder, der z.B. die Form eines Doppelschneckenextruders haben kann, wird das Ethylenpolymerisat vorzugsweise bei 120 bis 240°C, insbesondere bei 160 bis 200°C aufgeschmolzen. Über einen Seitenextruder oder durch eine Pumpe wird eine vorzugsweise 100 bis 150°C heiße Schmelze des ungesättigten Polyesters zugeführt. Die Verweilzeit der Schmelze im Extruder beträgt vorzugsweise 20 bis 300 s. Das Vermischen der Schmelzen geschieht in einem Scherfeld, dessen Dissipationsenergie vorzugsweise zwischen 0,05 und 0,4 [kWh·kg⁻¹] liegt. Die Dissipationsenergie ist der spezifische Energieeintrag in das Scherorgan. Sie kann z.B. bei einem Doppelschneckenextruder berechnet werden aus dem Drehmoment und der Leistungsaufnahme des Elektromotors, der die Energie auf die beiden Wellen des Extruders überträgt. Durch diese Scherung wird das Ethylenpolymerisat auf eine Teilchengröße von weniger als 200 µm, insbesondere von 10 bis 100 µm zerteilt. Da die Zerteilung in der Schmelze erfolgt, entstehen runde, annähernd kugelförmige Partikel mit glatter Oberfläche, die in dieser Form auch beim Abkühlen als disperse Phase in der kohärenten Polyesterphase erhalten bleiben. Dies zeigt sehr schön die beigefügte Abbildung, eine mikroskopische Aufnahme einer Polyethylendispersion in styrolischer Lösung eines ungesättigten Polyesterharzes im Dunkelfeld/Durchlicht. Das Abkühlen auf Temperaturen unterhalb des Kristallitschmelzpunktes des Ethylenpolymeren, vorzugsweise unterhalb von 120°C, erfolgt noch im Extruder, so daß aus diesem eine Dispersion von festen Ethylenpolymer-Partikeln im flüssigem ungesättigtem Polyester ausgepreßt wird. Diese Dispersion wird dann entweder direkt mit einem Vinylmonomeren C vermischt oder sie wird weiter abgekühlt, indem man sie z.B. in Wasser extrudiert oder schmelzegranuliert. Das trockene, blockfeste Granulat kann gelagert und transportiert und bei Bedarf weiterverarbeitet werden.

Es handelt sich um eine an sich neue härtbare, monomerfreie Formmasse in Granulatform, enthaltend
A) 90 bis 50 Gew.-% eines ungesättigten Polyesters und
B) 10 bis 50 Gew.-% eines Ethylenpolymerisats.

Dieses Granulat kann bei Bedarf in Vinylmonomeren C, z.B. Styrol, gelöst werden oder sie kann zu einer - ebenfalls neuen - rieselfähigen Spritzgußmasse weiterverarbeitet werden. In diesem Fall sind ungesättigte Polyester mit einem Erweichungspunkt nach Krämer/Sarnow/Nagel von mindestens 70°C bevorzugt, insbesondere kristalline ungesättigte Polyester, die aus symmetrischen Monomerbausteinen, wie Fumarsäure, Terephthalsäure, Butandiol-1,4 oder Hexandiol-1,6 aufgebaut sind.

Die rieselfähige Spritzgußmasse enthält
A) 90 bis 50 Gew.-% eines ungesättigten Polyesters mit einem Erweichungspunkt nach Krämer/Sarnow/Nagel von mindestens 70°C,
B) 10 bis 50 Gew.-% eines Ethylenpolymerisats,
C') 0 bis 30 Gew.-Teile, bezogen auf 100 A + B, eines copolymerisierbaren Monomeren mit einem Siedepunkt oberhalb von 140°C (bei Normaldruck),
sowie gegebenenfalls weitere übliche Zusatzstoffe.

Geeignete Monomere C' mit einem Siedepunkt oberhalb von 150°C sind z.B. Diallylphthalat, Diallylisophthalat und Methacrylsäureester von Trimethylolpropan, Neopentylglykol, Ethylenglykol, 2-Hydroxyethan und 2-Hydroxypropan.

Die Spritzgußmasse kann darüberhinaus weitere übliche Zusatzstoffe, wie Peroxid-Initiatoren, Gleitmittel, Formtrennmittel, Pigmente, Füllstoffe und Kurzglasfasern enthalten. Das Monomere C' und die weiteren Zusatzstoffe werden mit dem Granulat A + B auf üblichen Mischaggregaten, z.B. Knetern, Walzenstühlen oder Extrudern bei Temperaturen unterhalb der Zerfalltemperatur des Peroxid-Initiators, vorzugsweise bei 70 bis 100°C vermischt.

Wie oben angedeutet, kann die erfindungsgemäß hergestellte Formmasse mit üblichen Monomeren C vermischt werden. Dazu kommen insbesondere niedrigsiedende Vinylmonomere, wie z.B. Styrol, α-Methylstyrol, Vinyltoluol, Methylmethacrylat oder deren Mischungen in Frage. Styrol ist bevorzugt, insbesondere in Mengen von 10 bis 100 Gew.-Teile, bezogen auf 100 Gew.-Teile A + B.

Das Zumischen kann auf verschiedene Weise erfolgen: an kann nach der Schmelzemischung das Monomere direkt in den Extruder einspeisen und die Mischung schon dort herstellen; man kann die Formmasse aus dem Extruder als Schmelze in flüssiges, gegebenenfalls erwärmtes Monomeres eintragen und dort durch Rühren darin verteilen und man kann schließlich granulierte Formmasse mit dem Monomeren verrühren, wobei sich der ungesättigte Polyester löst.

In allen Fällen entsteht eine Dispersion des feinteiligen Ethylenpolymerisats B in einer Lösung des ungesättigten Polyesters A in dem Vinylmonomeren C.

### b) Rührkesselverfahren

Das erfindungsgemäße Vermischen der Polyesterschmelze mit der Ethylenpolymerisatschmelze kann auch in üblichen Rührkesseln, die mit einem kräftigen Rührer ausgerüstet sind, erfolgen. Dabei wird vorzugsweise diskontinuierlich gearbeitet. Dieses Verfahren ist mit Vorteil auszuführen, wenn der Kristallitschmelzpunkt des Ethylenpolymerisats unterhalb von 125°C liegt, also z.B. mit Niederdruckpolyethylen, und wenn Dispergiermittel zugesetzt werden.

Man kann in den Rührkessel mit der Schmelze des ungesättigten Polyesters das Ethylenpolymerisat entweder als Schmelze oder - bevorzugt - als Granulat oder Grieß eingeben. Die Massetemperatur im Rührkessel beträgt 140 bis 220°C, vorzugsweise 150 bis 200°C, die Verweilzeit 10 bis 60 min, vorzugsweise 20 bis 40 min. Nach beendeter Dispergierung wird die Schmelze aus dem Kessel ausgetragen. Sie kann granuliert werden; vorzugsweise wird sie aber anschließend mit Vinylmonomeren vermischt. Dies kann entweder dadurch geschehen, daß in den Rührkessel die erforderliche Menge Monomer zugegeben und mit der Schmelze verrührt wird, oder daß die Schmelze in einen nachgeschalteten Rührkessel eingetragen wird, in dem sich Monomeres befindet, das bevorzugt auf 40 bis 90°C erwärmt ist.

Sowohl beim Extruder- als auch beim Rührkesselverfahren entsteht nach Zusatz des Vinylmonomeren und Abkühlen eine Dispersion des Ethylenpolymerisats B in Form runder Partikel mit einem Durchmesser von 2 bis 200 µm in dem Polyesterharz A + C. Um die Dispersion auch über längere Zeit hinweg stabil zu halten und ein Agglomerieren der Ethylenpolymerisat-Partikel zu vermeiden, setzt man vorteilhaft ein übliches oberflächenaktives Dispergierhilfsmittel D zu, vorzugsweise in Mengen von 0,1 bis 15, insbesondere 0,5 bis 5 Gew.-Teile, bezogen auf 100 Gew.-Teile A + B. Die Dispersion hat dann folgende Zusammensetzung:
A) 90 bis 50 Gew.-% eines ungesättigten Polyesters,
B) 10 bis 50 Gew.-% eines Ethylenpolymerisats,
C) 10 bis 100 Gew.-Teile, bezogen auf 100 A + B, eines Vinylmonomeren und
D) 0 bis 15 Gew.-Teile, bezogen auf 100 A + B, eines Dispergiermittels.

Geeignete Dispergatoren D sind in Vinylaromaten oder in ungesättigten Polyestern oder in einem Polyester/Vinylaromat-Gemisch lösliche Polymere. Bevorzugt sind Ethylen-Vinylacetatcopolymerisate bzw. Polyvinylacetate, bevorzugt solche mit 60 bis 100 Gew.-% Vinylacetatgehalt, und einer Mooney-Viskosität von mindestens 15, vorzugsweise von 40 bis 65 Mooney, gemessen nach DIN 53 523 (L-4).

Weiterhin sind auch Poly-(meth)acrylsäureesterhomo- und -copolymerisate, wie z.B. Polyacrylsäuredecylester, oder Copolymerisate des Ethylens mit (Meth)acrylsäureestern geeignet, sowie Pfropfpolymerisate mit den genannten Polymeren als Pfropfsubstrat. Ferner sind Polyether, wie Polyethylenoxid, Polypropylenoxid und Blockcopolymerisate dieser beiden Verbindungen, ethoxylierte gesättigte und ungesättigte Fettsäuren und deren Derivate geeignet, sowie Cellulosederivate wie Methylcellulose, Ethylenhydroxycellulose oder Celluloseester, z.B. Celluloseacetat, Celluloseacetopropionat, Celluloseacetobutyrat oder Nitrocellulose. Geeignete Dispergatoren sind auch Blockcopolymere mit polaren und unpolaren Blocksegmenten, die linear, verzweigt oder kammartig aufgebaut sein können. Beispielsweise sind derartige Substanzen in DE-A 24 02 739 beschrieben. Sie enthalten Polyetherblöcke und unpolare Segmente aus vinylaromatischen Monomeren oder konjugierten Dienen.

Der flüssigen Dispersion von Ethylenpolymerisatpartikeln im Polyesterharz werden nun - zweckmäßigerweise in zwei Stufen - weitere Zusatzstoffe zugemischt. Zunächst werden schrumpfmindernde Thermoplasten, Inhibitoren, Beschleuniger, Viskositätserniedriger und Wachse, zweckmäßigerweise jeweils gelöst oder dispergiert im Monomeren C, zugegeben. Die erhaltene Dispersion ist gut fließfähig und lagerfähig. In Ausnahmefällen, nämlich bei hohem Gehalt an Ethylenpolymerisat, liegt sie als Paste vor, die zur Weiterverarbeitung leicht erwärmt werden muß. Kurz vor der Weiterverarbeitung wird dann der Radikalinitiator zugefügt, gegebenenfalls zusammen mit Füllstoffen, Fasern, Trennmitteln, Gleitmitteln und Eindickmitteln. Will man SMC-Massen herstellen, dann wird die Masse mit Verstärkungsfasern zusammen zu einem flächigen Halbzeug geformt und eingedickt.

Die wärmehärtbare Formmasse liegt als flächiges Halbzeug (SMC), als teigförmige Masse (BMC), als rieselfähige Spritzgußmasse oder als Paste vor. Die Weiterverarbeitung kann dementsprechend nach verschiedenen Methoden vorgenommen werden: SMC-Massen werden in Pressen, BMC-Massen und rieselfähige Massen durch Spritzgießen oder Spritzprägen und Pasten durch Pultrusion verformt. Während oder nach dem Verformen erfolgt die Härtung des Polyesterharzes, vorzugsweise bei Temperaturen oberhalb von 50°C, insbesondere zwischen 120 und 170°C.

Nach der Härtung bleibt das Ethylenpolymerisat als disperse Phase im gehärteten Polyesterharz als kohärenter Phase. Das Ethylenpolymerisat bewirkt im Formteil eine drastische Verminderung der Rißanfälligkeit bei Stoßbeanspruchung, wobei aber der Duromercharakter der Formteile, d.h., hohe Wärmeformbeständigkeit und gute Oberflächeneigenschaften, erhalten bleiben.

Anwendungsgebiete der Formmassen sind die Herstellung von Automobilteilen, z.B. im Karosseriebereich, Motorhauben, Heckklappen, Stoßfängerträger, Frontends und im Motorbereich Schallabschirmungen, Ansaugkrümmer und Abdeckungen, ferner Ersatzradmulden, Rückenlehnen für Sitze und Reflektoren für Scheinwerfer. Daneben spielen auch Anwendungen im Elektrosektor eine Rolle, z.B. die Herstellung von Verteilerkästen, Langfeldleuchten und Gehäusen für Elektroanlagen.

Die in den Beispielen genannten Prozente und Teile beziehen sich auf das Gewicht.

### Beispiele

A) Ungesättigte Polyesterharze
   UP-Harn A1
      In einem zweistufigen Kondensationsverfahren wurde ein monomerenfreier ungesättigter Polyester unter Rühren und durch Überleiten von Stickstoff hergestellt. In der ersten Stufe reagierten Isophthalsäure, Neopentylglykol und Propylenglykol im Molverhältnis 1:1,2:0,23 bei Temperaturen bis 200°C bis zur Säurezahl 10 und einer Schmelzviskosität bei 125°C von 1 000 [mPa·s] (Platte/Konus-Viskosimeter, Fa. Epprecht Instruments + Controls AG). Nach Zusatz von Maleinsäureanhydrid und weiterem Neopentylglykol im Molverhältnis 1:0,6, bezogen auf 1 Mol eingesetzte Isophthalsäure, wurde schließlich bis Säurezahl 19 und Schmelzviskosität (175°C) 4 300 [mPa·s] verestert, auf 150°C abgekühlt, 180 ppm Hydrochinon zugefügt und in Kühlwannen ausgegossen. Beim Abkühlen auf 23°C erstarrte das Produkt glasartig und ließ sich brechen. Das Granulat war blockfest beim Lagern und hatte einen Erweichungspunkt von 80°C (nach Krämer-Sarnow-Nagel).
   UP-Harz A2
      Ein ungesättigter Polyester mit Säurezahl 12 wurde in einem zweistufigen Verfahren hergestellt, bei dem im ersten Schritt äquimolare Mengen Dicyclopentadien und Maleinsäure bei 125 bis 135°C zum Maleinsäurehalbester umgesetzt und im Folgeschritt mit Neopentylglykol und Propylenglykol bei 190°C kondensiert werden. Die Einsatzstoffe weisen ein Molverhältnis 1:1:0,5:0,05 auf. Der ungesättigte Polyester wurde 70 %ig in Styrol gelöst und mit 100 ppm Hydrochin stabilisiert.
B) Ethylenpolymerisate
   - B1:: Ethylenhomopolymerisat mit
   Schmelzindex MFI (190/2.16) 18 [g/10 min] (DIN 53 735)
   Schmelzpunkt (DSC) 132 [°C] (ISO 3146)
   Dichte: 0,954 [g/cm³] (DIN 53 479-A)
   - B2:: Ethylenhomopolymerisat mit
   Schmelzindex MFI (190/2.16) 20 [g/10 min]
   Schmelzpunkt (DSC) 106 [°C]
   Dichte: 0,916 [g/cm³]
   - B3:: Ethylenhomopolymerisat mit
   Schmelzindex MFI (190/2.16) 36 [g/10 min]
   Schmelzpunkt (DSC) 112 [°C]
   Dichte: 0,924 [g/cm³]

### Beispiel 1

Beschrieben werden die Schmelzdispergierung von Polyethylen in einem ungesättigten Polyester, die Herstellung einer bei Raumtemperatur fließfähigen Dispersion in styrolischer Polyesterharzlösung und deren Verarbeitung zu SMC.
a) Schmelz dispergierung
Zur Herstellung von Granulaten mit disperser Polyethylenphase wurde Polyethylen B1 in einem Doppelwellenextruder (Typ ZSK 30, Werner & Pfleiderer) bei 150°C aufgeschmolzen und aus einem Seitenextruder mit der 130°C heißen Schmelze des ungesättigten Polyesters Al beschickt. Die Schneckendrehzahl betrug 150 Umdrehungen/ min, die Temperatur in der Mischzone 145°C und an der Strangaustrittsdüse 144°C. Der Strang wurde durch Wasser gezogen und granuliert. Er enthielt 40 % Polyethylen und 60 % ungesättigten Polyester. Das Granulat ließ sich bei 23°C wochenlang ohne Blockbildung lagern.
b) Herstellung einer Dispersion
In einer Rührapparatur wurden 30 Teile Styrol bei 23°C portionsweise unter Rühren mit 70 Teilen des obigen Granulats vermischt, 100 ppm Hydrochinon sowie 550 ppm 2,6-Dimethylchinon zugesetzt und auf 80°C erwärmt. Nach zwei Stunden war eine fließfähige Dispersion mit Säurezahl 7,3 und einer Viskosität (23°C) von 10 000 [mPa·s] entstanden. Zur Charakterisierung der Polyethylenphase wurde die Dispersion lichtmikroskopisch untersucht. Das beigefügte Photo zeigt eine Dunkelfeld/Durchlicht-Aufnahme (Vergrößerung 100:1) der Polyethylendispersion im UP-Harz. Die mittlere Teilchengröße liegt bei ca. 50 µm. Die Teilchen haben eine annähernd runde Form und glatte oberfläche.
c) SMC-Herstellung und Prüfung
Mit Hilfe eines schnell laufenden Rührwerks wurde folgende Harz/Füllstoffmischung präpariert:

| | | |
|---|---|---|
| 100 | Teile | Dispersion 1b) |
| 0,3 | Teile | Propylenglykol |
| 1,5 | Teile | tert.-Butylperbenzoat |
| 50 | Teile | Füllstoff Kreide Millicarb® |
| 3,75 | Teile | MgO-Paste Luvatol® MK 35 |
| 4,5 | Teile | Zn-Stearat |

Die SMC-Herstellung erfolgte auf einer Technikumsanlage, bei der die Harz/Füllstoff-Mischung auf einer Polyethylenfolie mit geschnittenen Glasfaserrovings (2,5 cm lang) vereinigt, aufgerollt und 3 Tage bei 23°C gelagert wurde. Danach ließen sich die Abdeckfolien abziehen, und das klebfreie SMC wurde in einem polierten Stahlwerkzeug 5 min lang unter 50 bar bei 145°C zu 4 mm dicken Platten mit einem Glasfasergehalt von 28 % verpreßt. Tabelle 1 zeigt die Eigenschaften des Formstoffes aus SMC 1c .

Der Kugelfalltest wird folgendermaßen ausgeführt. Für diesen Test werden aus 4 mm dicken Formstoffplatten Prüfkörper (80 x 80 mm) ausgearbeitet, zwischen Metallringen (Durchmesser 60 mm) eingespannt und darauf aus 70 cm Höhe eine Stahlkugel (761 g, Durchmesser: 57,1 mm) allen gelassen. Die Zugseite des geschädigten Prüfkörpers wird mit roter Farbstofflösung (Diffusionsrot, Fa. H. Klumpf) eingesprüht, nach 5 min mit Wasser abgewaschen, getrocknet und der Durchmesser der roten Schädigungszone ermittelt. Durch die Mitte der Schädigungszone wird aufgeschnitten und an der Schnittfläche die Dicke der roten Zone gemessen (Lupe mit Skala). Je geringer die Zahlenwerte beider Meßgrößen sind, desto unempfindlicher verhalten sich die Formstoffe bei Stoß- oder Schlagbeanspruchung.

**Tabelle 1**

| | | Formstoff aus SMC 1c |
|---|---|---|
| E-Modul (nach EN 63) | [N/mm²] | 8 900 |
| Schlagzähigkeit (23°C) nach DIN 53 453) | [kJ/m²] | 73 |
| Kugelfalltest | | |
| Schädigungstiefe | [mm] | 0,5 |
| Schädigungszone (Durchmesser) | [mm] | 15 |

### Beispiele 2 und 3

Beschrieben werden die Schmelzdispergierungen von Ethylenhomopolymerisaten B2 und B3 im ungesättigten Polyester Al, die Herstellung einer fließfähigen Dispersion in styrolischer Polyesterharzlösung und deren Verarbeitung zu SMC im Labormaßstab.
a) Schmelzdispergierung
Zur Herstellung von ungesättigten Polyestern mit disperser Polyethylenphase wurden Ethylenhomopolymerisate B2 und B3 in einem Doppelwellenextruder (Typ ZSK 30, Werner & Pfleiderer) bei 150°C aufgeschmolzen und jeweils aus einem Seitenextruder mit der 130°C heißen Schmelze des ungesättigten Polyesters Al gemischt (100 Umdrehungen pro Minute). Die Schneckendrehzahl des Hauptextruders betrug 200 Umdrehungen pro Minute, die Massetemperatur in der Mischzone 140°C und an der Austrittsdüse 152°C. Die Schmelzen wurden auf Blechunterlagen abgekühlt, nach glasartigem Erstarren gebrochen und bei Raumtemperatur mit Hilfe einer Mühle pulverisiert. Diese Pulver blieben beim Lagern über Wochen blockfest. Sie enthielten je 60 % ungesättigten Polyester und 40 % Ethylenhomopolymerisat.
b) Herstellung von Dispersionen
In einer Rührapparatur wurden 30 Teile Styrol bei 23°C portionsweise unter Rühren jeweils mit den Pulvern aus 2a vermischt, stabilisiert mit 500 ppm 2,6-Dimethylchinon und auf 80°C erwärmt. In drei Stunden waren fließfähige Dispersionen entstanden, die aufgrund lichtmikroskopischer Untersuchungen mittlere Teilchengrößen um 50 µm aufwiesen. Ihre Viskosität (23°C) betrug 19 000 [mPa·s] (mit Polyethylen B2) und 55 000 [mPa·s] (mit Polyethylen B3).
c) Herstellung von SMC und Formstoffprüfung
Mit Hilfe eines schnell laufenden Rührwerks wurde folgende Harz/Füllstoffmischung präpariert:

| | | |
|---|---|---|
| 60 | Teile | Dispersion 2a) |
| 30 | Teile | UP-Harz A2 |
| 10 | Teile | Polyethylenpulver (gemahlen, Lupolen 1 800 S, P 15 LP) |
| 100 | Teile | Füllstoff Kreide Millicarb® |
| 4,5 | Teile | Zinkstearat |
| 1,5 | Teile | tert.-Butylperbenzoat |
| 3,75 | Teile | MgO-Paste Luvatol® MK 35 |

Die SMC-Herstellung erfolgte im Labormaßstab. Dabei wurde obige Mischung auf einer Polyethylenfolie gleichmäßig verteilt, 30 % Glasfaserrovings (2,6 cm Schnittlänge) eingestreut und nach Abdeckung mit einer weiteren Folie durch Walzen gut imprägniert. Nach 1 Tag resultierte ein klebfreies Halbzeug, das in einem Stahlwerkzeug (4 x 160 x 160) zu Platten verpreßt wurde (10 min, 145°C, 200 bar). Die Stoßanfälligkeit der Formstoffe wurde anhand des Kugelfalltests analog zu Beispiel 1 beurteilt. Das vorteilhafte Verhalten der erfindungsgemäßen Formstoffe geht aus Tabelle 2 hervor, in der die Versuchsergebnisse zusammengefaßt sind.

**Tabelle 2**

| Bsp. | Dispersion auf Polyethylenbasis | Kugelfalltest | |
|---|---|---|---|
| | | Schädigungszone [mm] | Eindringtiefe [mm] |
| 2 | B2 | 13 | 0,1 |
| 3 | B3 | 13 | 0,5 |

### Beispiel 4

In einem Rührgefäß, ausgestattet mit N2-Zuleitung, Ankerrührer und Dosiervorrichtung wurde die Schmelze von UP-Harz Al (70 Teile) bei 180°C portionsweise mit Ethylenhomopolymerisat B2 (29 Teile) und Polyproylenwachs¹⁾ (1 Teil) unter kräftigem Rühren vermischt. Nach ca. 30 Minuten bei 180°C ließ man unter fortwährendem Rühren allmählich auf 140°C abkühlen und ließ dann Styrol zulaufen, das 1 000 ppm 2,6-Dimethylchinon zur Stabilisierung enthielt. Es resultierte eine feinteilige Dispersion mit einer Viskosität (23°C) von 3 150 [mPa·s]. Lichtmikroskopisch ergab sich eine mittlere Teilchengröße von etwa 40 µm (Dunkelfeld/Durchlicht; Vergrößerung 100:1)
¹⁾ Durch thermischen Abbau gewonnenes Polypropylenwachs mit 6,5 % gepfropftem Maleinsäureanhydrid. Molgewicht ca. 25 000.

Zur Prüfung der Dispersion wurde analog zu Beispiel 2 im Labormaßstab ein SMC aus folgender Harz/Füllstoffmischung präpariert:

| | | |
|---|---|---|
| 100 | Teile | Dispersion 3 |
| 100 | Teile | Füllstoff Kreide, Millecarb® |
| 4,5 | Teile | Zinkstearat |
| 1,5 | Teile | tert.-Butylperbenzoat |
| 3,75 | Teile | MgO-Paste Luvatol® MK 35 |
| 0,3 | Teile | Propylenglykol |

Der Glasfasergehalt (geschnittene Rovings, 2,6 cm lang) betrug 30 %. Nach einem Tag resultierte ein klebfreies Halbzeug, das unter einem Druck von 200 bar 10 min bei 145°C im Stahlwerkzeug (4 x 160 x 160 mm) gehärtet wurde. Eine daraus geschnittene Prüfplatte wurde dem Kugelfalltest unterzogen, wie er in Beispiel 1 beschrieben ist. Die Ergebnisse sprechen für eine geringe Stoßempfindlichkeit des erfindungsgemäßen Formstoffs.

| Kugelfalltest | |
|---|---|
| Schädigungszone [mm] | Eindringtiefe [mm] |
| 12 | 0,7 |

## Patentansprüche

1. Verfahren zur Herstellung einer härtbaren Formmasse auf Basis einer Dispersion von 10 bis 50 Gew.-% eines feinteiligen Ethylenpolymerisats in 90 bis 50 Gew.-% eines ungesättigten Polyesterharzes, dadurch gekennzeichnet, daß man eine Schmelze des Ethylenpolymerisats in einer Schmelze des ungesättigten Polyesters gleichmäßig verteilt.

2. Verfahren nach Anspruch 1, dadurch gekennzeichnet, daß das Vermischen der Schmelzen in einem Extruder vorgenommen wird.

3. Verfahren nach Anspruch 1, dadurch gekennzeichnet, daß das Vermischen der Schmelzen in einem Rührkessel vorgenommen wird.

4. Verfahren nach Anspruch 1, dadurch gekennzeichnet, daß man die hergestellte flüssige Mischung abkühlt und die Formmasse granuliert.

5. Verfahren zur Herstellung einer härtbaren Formmasse nach Anspruch 1 in Form einer Dispersion des feinteiligen Ethylenpolymerisats in einer Lösung des ungesättigten Polyesters in einem Vinylmonomeren, dadurch gekennzeichnet, daß man die flüssige Mischung aus ungesättigtem Polyester und Ethylenpolymerisat entweder direkt mit einem Vinylmonomeren versetzt oder abkühlt und granuliert und dann mit einem Vinylmonomeren versetzt.

6. Verfahren nach Anspruch 5, dadurch gekennzeichnet, daß man ein Dispergierhilfsmittel zusetzt.

7. Verfahren nach Anspruch 5, dadurch gekennzeichnet, daß das feinteilige Ethylenpolymerisat in Form runder Partikel mit einem mittleren Durchmesser von 2 bis 200 µm in dem Polyesterharz dispergiert ist.

8. Verfahren nach Anspruch 5, dadurch gekennzeichnet, daß die Dispersion folgende Zusammensetzung aufweist:
A) 90 bis 50 Gew.-% eines ungesättigten Polyesters,
B) 10 bis 50 Gew.-% eines Ethylenpolymerisats,
C) 10 bis 100 Gew.-Teile, bezogen auf 100 A + B, eines Vinylmonomeren,
D) 0 bis 15 Gew.-Teile, bezogen auf 100 A + B, eines Dispergiermittels.

## Claims

1. Process for the production of a curable moulding composition based on a dispersion of 10 to 50 wt-% of a finely divided ethylene polymer in 90 to 50 wt-% of an unsaturated polyester resin, characterised in that a melt of the ethylene polymer is uniformly distributed in a melt of the unsaturated polyester.

2. Process according to Claim 1, characterised in that blending of the melts is undertaken in an extruder.

3. Process according to Claim 1, characterised in that blending of the melts is undertaken in a stirrer vessel.

4. Process according to Claim 1, characterised in that the liquid mixture produced is cooled and the moulding composition is granulated.

5. Process for the production of a curable moulding composition according to Claim 1 in the form of a dispersion of the finely divided ethylene polymer in a solution of the unsaturated polyester in a vinyl monomer, characterised in that the liquid mixture consisting of unsaturated polyester and ethylene polymer is either mixed directly with a vinyl monomer or is cooled and granulated and then mixed with a vinyl monomer.

6. Process according to Claim 5, characterised in that a dispersing agent is added.

7. Process according to Claim 5, characterised in that the finely divided ethylene polymer is dispersed in the polyester resin in the form of globular particles having a mean diameter from 2 to 200 µm.

8. Process according to Claim 5, characterised in that the dispersion has the following composition:
A) 90 to 50 wt-% of an unsaturated polyester,
B) 10 to 50 wt-% of an ethylene polymer,
C) 10 to 100 parts by weight, relative to 100 A + B, of a vinyl monomer,
D) 0 to 15 parts by weight, relative to 100 A + B, of a dispersing agent.

## Revendications

1. Procédé pour la préparation d'une matière à mouler durcissable à base d'une dispersion de 10 à 50 % en poids d'un polymère de l'éthylène en fines particules dans 90 à 50 % en poids d'une résine de polyester insaturé, caractérisé en ce que l'on répartit uniformément une masse fondue du polymère de l'éthylène dans une masse fondue du polyester insaturé.

2. Procédé selon la revendication 1, caractérisé en ce que l'on mélange les masses fondues dans une extrudeuse.

3. Procédé selon la revendication 1, caractérisé en ce que l'on mélange les masses fondues dans un récipient équipé d'un dispositif d'agitation.

4. Procédé selon la revendication 1, caractérisé en ce que l'on refroidit le mélange fluide obtenu à la préparation et on met la matière à mouler à l'état de granulés.

5. Procédé de préparation d'une matière à mouler durcissable selon la revendication 1 à l'état de dispersion du polymère de l'éthylène en fines particules dans une solution du polyester insaturé dans un monomère vinylique, caractérisé en ce que l'on ajoute directement un monomère vinylique au mélange fluide du polyester insaturé et du polymère de l'éthylène, ou bien on refroidit le mélange fluide du polyester insaturé et du polymère de l'éthylène et on le met à l'état de granulés puis on ajoute un monomère vinylique.

6. Procédé selon la revendication 5, caractérisé en ce que l'on ajoute un produit auxiliaire dispersant.

7. Procédé selon la revendication 5, caractérisé en ce que le polymère de l'éthylène en fines particules est dispersé à l'état de particules de forme arrondie à un diamètre moyen de 2 à 200 µm dans la résine de polyester.

8. Procédé selon la revendication 5, caractérisé en ce que la dispersion est à la composition suivante :
A) 90 à 50 % en poids d'un polyester insaturé,
B) 10 à 50 % en poids d'un polymère de l'éthylène,
C) 10 à 100 parties en poids, pour 100 parties de A + B, d'un monomère vinylique,
D) 0 à 15 parties en poids, pour 100 parties en poids de A + B, d'un agent dispersant.
